# FASCICULE DE BREVET EUROPEEN

(11) **EP 1 171 223 B1**
(45) Date de publication et mention de la délivrance du brevet: **18.06.2003**
(21) Numéro de dépôt: 00920797.8
(22) Date de dépôt: 14.04.2000
(51) Int. Cl.: B01D 53/92, F01N 3/02, D01D 5/253

(54) **DISPOSITIF DE TRAITEMENT DES GAZ D'ECHAPPEMENT D'UN MOTEUR DE VEHICULE AUTOMOBILE**
VORRICHTUNG ZUR BEHANDLUNG DER ABGASE EINES AUTOMOTORS
DEVICE FOR TREATING A MOTOR VEHICLE ENGINE EXHAUST GASES

(30) Priorité: 16.04.1999 FR 9904832
(43) Date de publication de la demande: 16.01.2002
(73) Titulaire: Renault s.a.s., 92100 Boulogne Billancourt (FR); Institut Francais du Petrole, 92852 Rueil Malmaison Cedex (FR); IMPHY UGINE PRECISION, 92800 Puteaux (FR); Arvin Exhaust S.A., 89304 Joigny (FR); Gervois S.A., 80580 Pont Rémy (FR)
(72) Inventeur: DAVIDSON, James, F-58640 Varennes Vauzelles (FR); WALDER, André, F-94240 L'Hay les Roses (FR); MARTIN, Brigitte, F-69230 Saint Genis Laval (FR)
(74) Mandataire: Kohn, Philippe
(86) Numéro de dépôt international: FR0000967
(87) Numéro de publication internationale: WO00062907

(56) Documents cités:
- FR-A- 2 703 104
- FR-A- 2 704 464
- FR-A- 2 751 559
- GB-A- 1 050 966
- US-A- 4 930 565

## Description

L'invention concerne un dispositif de traitement des gaz d'échappement d'un moteur de véhicule automobile, et un procédé pour la fabrication d'un tel dispositif.

L'invention concerne plus particulièrement un dispositif de traitement des gaz d'échappement d'un moteur de véhicule automobile, du type qui comporte un tube d'arrivée des gaz d'échappement et un tube d'évacuation des gaz d'échappement entre lesquels est interposée une enceinte de traitement des gaz qui comporte un moyen de traitement des gaz réalisé en fibres.

L'invention a notamment pour objet un dispositif de traitement des gaz d'échappement d'un moteur de véhicule automobile qui permet la diminution des émissions polluantes par un traitement catalytique.

On connaît de nombreux exemples de dispositifs de traitement des gaz du type décrit précédemment.

Il s'agit généralement de dispositifs dans lesquels les moyens de traitement des gaz sont formés par un bloc poreux en matériau présentant des propriétés catalytiques, plus communément connu sous le nom de "monolithe".

Ces dispositifs peuvent conventionnellement être réalisés sous la forme de dispositifs dans lesquels une partie cylindrique du tube d'arrivée, qui est agencée à l'intérieur de l'enceinte de traitement des gaz et qui comporte des perçages radiaux sur sa périphérie est recouverte d'un bloc tubulaire de traitement des gaz en fibres métalliques.

Les gaz d'échappement sont acheminés dans l'enceinte de traitement des gaz par l'intermédiaire du tube d'arrivée, traversent le bloc tubulaire de traitement et sont évacués hors de l'enceinte de traitement des gaz par le tube d'évacuation.

Les dispositifs de traitement des gaz d'échappement sont couramment employés dans tous les types d'automobiles pour respecter les normes de dépollution en vigueur.

Ces dispositifs comportent généralement des blocs de traitement qui sont composés de substrats céramiques alvéolés dits "en nids d'abeille", dont les canaux internes sont recouverts d'une couche de matériau catalytique qui permet la conversion des polluants.

D'autres blocs de traitement sont réalisés à partir de fibres qui présentent l'avantage. par rapport aux substrats alvéolés en nid d'abeilles d'entraîner un écoulement turbulent des gaz d'échappement dans l'enceinte de traitement des gaz, ce qui a pour conséquence d'accroître le brassage des gaz et la conversion des polluants.

Les documents FR-A-2.703.104 et FR-A-2.751.559 décrivent de tels blocs de traitement dont les fibres sont réalisées à partir de fils tréfilés. L'inconvénient de telles fibres est que le procédé de tréfilage qui permet leur obtention limite considérablement les possibilités de choix des compositions des alliages de ces fibres. D'autre part leur coût de fabrication est élevé.

En particulier, les alliages qui sont traditionnellement utilisés dans la fabrication de ces fibres comportent du fer, de l'aluminium et du chrome, et éventuellement de faibles concentrations d'yttrium ou de terres rares, ou encore de mélanges de terres rares, couramment appelés "mischmetall".

La résistance des fibres à l'oxydation par les gaz d'échappement est ainsi assurée en surface des fibres par une mince couche d'alumine de composition chimique Al₂O₃ formée à la surface des fibres. Au fur et à mesure de l'usure du dispositif de traitement des gaz, cette couche d'alumine s'épuise en consommant l'aluminium de l'alliage. Lorsque l'aluminium est épuisé, la corrosion du bloc de traitement s'accélère rapidement.

La longévité d'un bloc de traitement des gaz est donc d'autant plus grande que l'alliage comporte un pourcentage d'aluminium élevé.

Or, on a constaté que les procédés de tréfilage ne permettaient pas d'utiliser des alliages comportant plus de 5% en poids d'aluminium pour la fabrication des fibres. Au delà de cette valeur, les fils formant les fibres ne sont plus suffisamment ductiles pour pouvoir être obtenus par tréfilage.

Pour remédier à cet inconvénient, on a proposé de réaliser les fibres par un procédé de fonderie en coulée directe, connu d'après le document FR-A-2.704.464. Dans un tel procédé, les fibres sont obtenues par solidification sur un tambour rotatif d'un alliage à base de fer, de chrome ainsi que d'aluminium dans une proportion en poids supérieure ou égale à 5%, l'alliage étant fondu dans un creuset et étalé par un bec du creuset qui comporte des trous et qui lèche la surface cylindrique du tambour rotatif dont des rainures sont agencées au droit des trous.

Des fibres obtenues de cette façon sont particulièrement avantageuses car elles peuvent comporter une teneur en poids d'aluminium supérieure ou égale à 5%, ce qui permet d'accroître leur longévité.

Toutefois, le procédé de fonderie par coulée directe, aussi appelé procédé "planar flow", qui est actuellement utilisé est un procédé qui ne permet d'obtenir que des fibres longitudinales de section rectangulaire mince.

Or, on a constaté que des fibres métalliques obtenues par ce procédé permettent de proposer un bloc de traitement des gaz qui, quoique permettant d'obtenir un écoulement turbulent des gaz d'échappement à l'intérieur de l'enceinte de traitement des gaz favorable à la conversion des polluants, a pour inconvénient d'opposer une contre-pression élevée à l'écoulement des gaz d'échappement. ce qui nuit au bon fonctionnement du moteur du véhicule.

Pour remédier à cet inconvénient, l'invention propose d'utiliser des fibres ne perturbant que très peu l'écoulement des gaz d'échappement.

Dans ce but, l'invention propose un dispositif de traitement des gaz d'échappement d'un moteur de véhicule automobile, du type décrit précédemment, caractérisé en ce que les fibres du moyen de traitement des gaz présentent une section transversale en forme de lunule, notamment lenticulaire convexe.

Selon d'autres caractéristiques de l'invention :
- les fibres sont métalliques et reçoivent un enduit catalytique de traitement des gaz,
- la section transversale des fibres lenticulaires est d'une hauteur comprise entre 30µm et 350µm, d'une épaisseur comprise entre 20µm et 200µm, et d'une largeur comprise entre 100µm et 1000µm,
- les fibres sont réalisées en un alliage à base de fer, de chrome, de terres rares, et d'aluminium dans une proportion en poids supérieure ou égale à 5%,
- le moyen de traitement des gaz comporte un bloc, notamment tubulaire, qui s'étend à l'intérieur de l'enceinte de traitement des gaz, qui est constitué d'un réseau de fibres, et qui est traversé par les gaz d'échappement cheminant du tube d'arrivée des gaz vers le tube d'évacuation des gaz.

L'invention propose aussi, pour la fabrication du bloc, un procédé faisant intervenir un procédé, connu du document US-A-4,930,565 sous le nom de procédé "melt overflow".

L'invention propose notamment un procédé pour la fabrication d'un bloc en fibres métalliques pour un dispositif de traitement des gaz d'échappement d'un moteur de véhicule automobile, caractérisé en ce qu'il comporte une première étape de fabrication des fibres du bloc selon le procédé "melt overflow" dans lequel les fibres sont obtenues par solidification, sur un tambour rotatif, muni de dents sur sa périphérie, d'un alliage à base de fer, de chrome, de terres rares et d'aluminium dans une proportion en poids supérieure ou égale à 5%, qui est fondu dans un creuset et étalé par une busette du creuset qui lèche la surface cylindrique du tambour rotatif.

Selon d'autres caractéristiques du procédé :
- le procédé met en oeuvre un tambour rotatif qui comporte des dents circulaires perpendiculaires à l'axe du cylindre qui sont dimensionnées pour que les fibres qu'elles arrachent à leurs sommets présentent une section lenticulaire, notamment convexe, d'une hauteur comprise entre 30µm et 350µm, d'une épaisseur comprise entre 20µm et 200µm, et d'une largeur comprise entre 100µm et 1000µm.
- le procédé comporte une deuxième étape de mise en forme du bloc lors de laquelle les fibres sont amassées selon des orientations aléatoires dans un moule, notamment tubulaire, ouvert à ses deux extrémités et une troisième étape de soudage au cours de laquelle deux électrodes reliées à un générateur de courant sont introduites dans l'amas de fibres, et en ce qu'une décharge de courant est délivrée par le générateur de courant pour souder les fibres entre elles,
- le procédé comporte une quatrième étape au cours de laquelle le bloc en fibres est enduit d'un matériau catalytique qui recouvre chaque fibre,

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe longitudinale axiale d'un dispositif de traitement des gaz d'échappement d'un moteur de véhicule automobile ;
- la figure 2 est une vue en coupe transversale d'une fibre utilisée pour la fabrication d'un bloc de traitement des gaz selon l'invention ;
- la figure 3 est une vue en perspective des éléments mis en oeuvre dans un procédé "melt overflow" utilisé dans la réalisation des moyens de traitement selon l'invention ; et

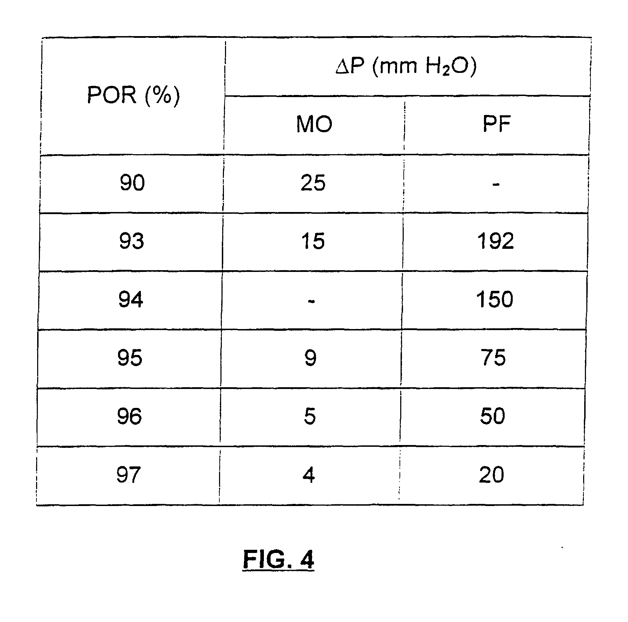

- la figure 4 est un tableau comparatif des porosités des fibres obtenues par les procédés "planar flow" et "melt overflow".

Dans la description qui va suivre, des chiffres de référence identiques désignent des pièces identiques ou ayant des fonctions similaires.

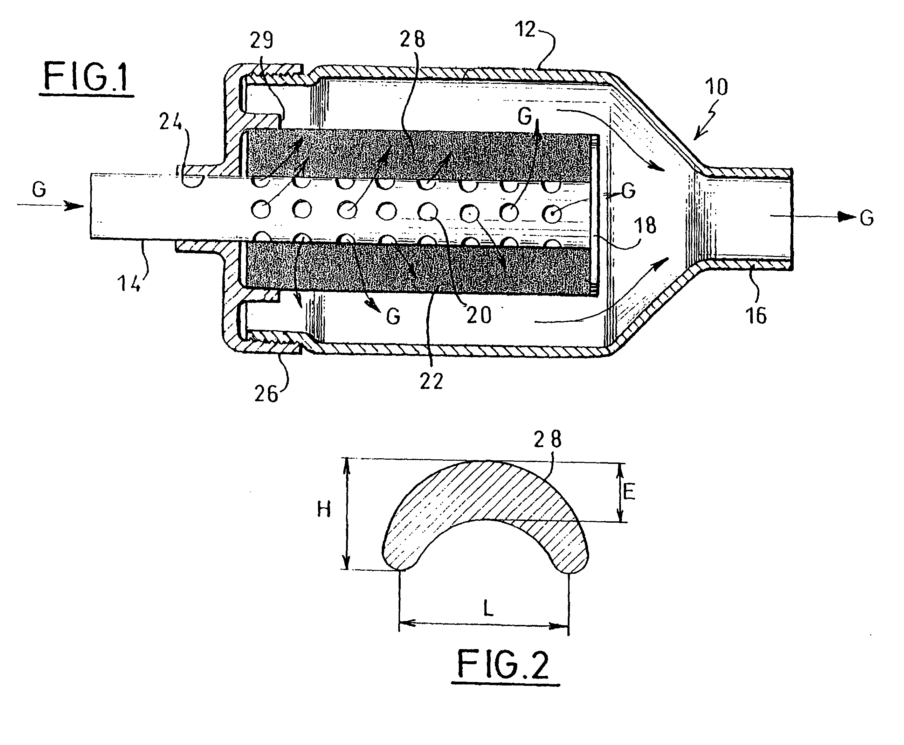

On a représenté à la figure 1 un dispositif 10 pour le traitement des gaz G d'échappement d'un moteur de véhicule automobile.

De manière connue, le dispositif 10 comporte une enceinte 12 de traitement des gaz sensiblement cylindrique aux extrémités axiales opposées de laquelle sont agencés un tube 14 d'arrivée des gaz G d'échappement et un tube 16 d'évacuation des gaz G d'échappement.

Il sera compris que cette disposition n'est pas limitative de l'invention et que l'enceinte de traitement des gaz 12. le tube 14 et le tube 16 ne sont pas nécessairement des éléments cylindriques, mais peuvent présenter toute forme utile à l'implantation d'un tel dispositif 10 sous une caisse d'un véhicule automobile.

De manière connue, un moyen de traitement des gaz est interposé sur le trajet des gaz G d'échappement, entre le tube 14 d'arrivée des gaz G d'échappement et le tube 16 d'évacuation des gaz G d'échappement.

Dans le mode de réalisation de l'invention représenté à la figure 1, le tube 14 d'arrivée des gaz G d'échappement est percé de multiples orifices 20 et est fermé à son extrémité par une plaque 18 d'un diamètre correspondant au diamètre d'un bloc 22 tubulaire de traitement des gaz qui constitue le moyen de traitement.

Lors du montage, le bloc 22 tubulaire est enfilé sur le tube d'arrivée 14, puis le tube 14 est monté de façon à traverser un trou 24 d'un couvercle 26 qui ferme l'enceinte 12 de traitement des gaz et de façon que le bloc 22 tubulaire soit reçu dans une collerette intérieure 29 du couvercle 26.

De la sorte, les gaz G d'échappement arrivent dans l'enceinte 12 de traitement des gaz par le tube d'arrivée 14, sortent du tube d'arrivée 14 par les trous 20, traversent le bloc 22 de traitement des gaz, et ils sortent de l'enceinte 12 de traitement des gaz par le tube 16 d'évacuation des gaz G d'échappement suivant les flèches de la figure 1.

Le bloc 22 est. de manière connue, un bloc tubulaire dont le diamètre intérieur correspond au diamètre extérieur du tube 14 d'arrivée des gaz G d'échappement et dont le diamètre extérieur est inférieur au diamètre intérieur de l'enceinte 12 cylindrique.

En variante (non représentée) le tube d'arrivée 14 peut déboucher à une première extrémité du bloc de traitement 14 sans le traverser, et le bloc peut être reçu à l'intérieur d'un tube de renfort externe, notamment cylindrique, qui est muni de multiples perçages sur sa périphérie et fermé à sa seconde extrémité par une plaque analogue à la plaque, 18 décrite précédemment.

Il sera bien compris que tout mode de réalisation visant à interposer un moyen de traitement des gaz sur le trajet des gaz G d'échappement, entre le tube 14 d'arrivée des gaz G d'échappement et le tube 16 d'évacuation des gaz G d'échappement peut convenir à la réalisation de l'invention. A ce titre, le bloc pourrait être un bloc plein, communément appelé "monolithe", traversé axialement par les gaz d'échappement (G).

De manière connue, le bloc 12 est constitué de fibres 28 métalliques qui sont obtenues par un procédé de fonderie par coulée directe.

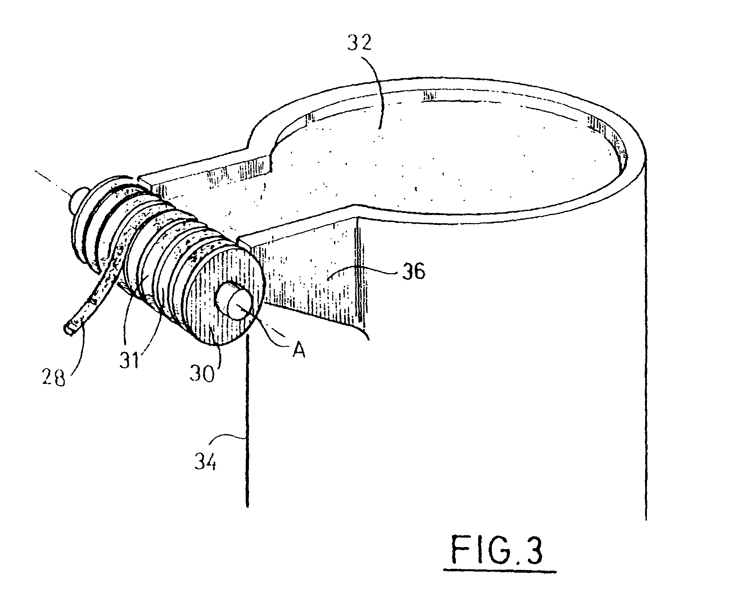

Conformément à l'invention, le procédé utilisé pour la réalisation des fibres 28 est un procédé de fonderie connu sous le nom de procédé "melt overflow", qui est décrit en référence à la figure 3.

Dans un tel procédé. les fibres 28 sont obtenues par solidification sur un tambour rotatif 30, muni sur sa périphérie de dents 31, d'un alliage 32 à base de fer. de chrome, et d'aluminium dans une proportion en poids supérieure ou égale à 5%, qui est fondu dans un creuset 34 et étalé par une bec 36 du creuset 34 qui lèche la surface cylindrique du tambour rotatif 30. L'alliage 32 peut aussi contenir éventuellement de faibles concentrations d'yttrium ou de terres rares, ou encore de mélanges de terres rares, couramment appelés "mischmetall".

Une proportion de plus de 5% en poids d'aluminium dans l'alliage permet notamment d'obtenir des fibres qui sont susceptibles de résister plus longtemps à la corrosion que des fils conventionnels.

Le tambour 30 rotatif comporte des dents 31 perpendiculaires à l'axe "A" du cylindre dont les sommets sont dimensionnés et/ou profilés pour que les fibres 28 qu'elles arrachent présentent des dimensions particulières déterminées, le tambour 30 débitant des fibres 28 en continu. Un tel procédé permet la fabrication simultanée de plusieurs fibres 28. Le cas échéant, la longueur des fibres 28 peut être limitée par la présence d'une ou plusieurs entailles (non représentées) parallèles à l'axe A ou par tronçonnage ultérieur.

Conformément à l'invention, les fibres 28 obtenues lors d'une première étape par l'intermédiaire du procédé "melt overflow" ont une section transversale qui présente une forme en "haricot" ou lunule, notamment lenticulaire convexe, qui est représentée à la figure 2.

Ainsi les fibres 28 présentent une section lenticulaire, notamment convexe, d'une hauteur (H) comprise entre 30µm et 350µm, d'une épaisseur (E) comprise entre 20µm et 200µm, et d'une largeur (L) comprise entre 100µm et 1000µm.

Ces dimensions de fibres permettent d'obtenir, comme on le verra ultérieurement, un bon écoulement des gaz G d'échappement à travers le bloc 22. notamment un écoulement n'opposant qu'une contre-pression minimale aux gaz G d'échappement, la perte de charge globale dans la ligne d'échappement étant ainsi réduite.

Conformément à l'invention, le procédé selon l'invention comporte une deuxième étape de mise en forme du bloc tubulaire 22 au cours de laquelle les fibres 28 sont amassées selon des orientations aléatoires dans un moule tubulaire (non représenté) ouvert à ses deux extrémités.

Cette configuration n'est pas limitative, et dans le cas où l'on souhaiterait réaliser un bloc qui ne soit pas un bloc tubulaire, la même deuxième étape de mise en forme peut être mise en oeuvre en utilisant un moule de forme appropriée.

Puis le procédé selon l'invention comporte une troisième étape de soudage au cours de laquelle deux électrodes (non représentées) reliées à un générateur de courant sont introduites dans l'amas de fibres 28, et au cours de laquelle une décharge de courant est délivrée par le générateur de courant pour souder les fibres 28 entre elles.

Avantageusement, la décharge de courant est une décharge très courte et de très forte intensité qui réalise un soudage quasi-instantané des fibres 28 entre eux.

On obtient ainsi un bloc 22 particulièrement résistant et homogène.

En outre, l'avantage des fibres 28 obtenues par le procédé "melt overflow" est que leur section, contrairement à la section de fils obtenus par un procédé "planar flow" conventionnel, n'est pas rectangulaire. Les fibres 28 ne peuvent s'empiler les unes sur les autres dans le moule tubulaire et elles prennent spontanément des directions aléatoires.

Le résultat en est un bloc 22 "aéré", n'opposant que peu de contre-pression à l'échappement. A titre d'exemple, pour un bloc de 24 mm de diamètre et de 71 mm de longueur, compacté de manière à obtenir une porosité de 97% et soumis à un débit de gaz G de 1020 litres à l'heure, la perte de charge, ou contre pression mesurée en Pascals, est de 39 Pascals pour le bloc de fibres 28 obtenues avec le procédé "melt overflow", contre 196 Pascals pour un bloc conventionnel de fibres 28 obtenues avec le procédé planar flow "PF" connu de l'art antérieur. Lorsque la porosité "POR" du bloc diminue, l'avantage en faveur des fibres obtenue par le procédé melt overflow "MO" est encore plus marqué.

Enfin, lors d'une quatrième étape du procédé selon l'invention, le bloc 22 en fibres 28 est enduit d'un matériau catalytique, notamment une couche céramique poreuse appelée "washcoat", imprégnée de substances catalytiques.

L'adhérence du "washcoat" est assurée par la couche d'alumine initialement présente en surface des fibres, et est éventuellement renforcée par un traitement préalable d'oxydation.

L'invention permet donc de disposer d'un moyen de traitement des gaz ayant une grande longévité et n'opposant qu'une faible contre pression aux gaz G d'échappement.

## Revendications

1. Dispositif (10) de traitement catalytique des gaz (G) d'échappement d'un moteur de véhicule automobile, du type qui comporte un tube (14) d'arrivée des gaz (G) d'échappement et un tube (16) d'évacuation des gaz (G) d'échappement entre lesquels est interposée une enceinte (12) de traitement des gaz qui comporte un moyen de traitement des gaz réalisé en fibres (28) métalliques, **caractérisé en ce que** les fibres (28) du moyen de traitement des gaz sont orientées aléatoirement et sont des fibres (28) allongées qui présentent une section transversale en forme de lunule, notamment lenticulaire convexe dont la section transversale est d'une hauteur (H) comprise entre 30µm et 350µm, d'une épaisseur (E) comprise entre 20µm et 200µm, et d'une largeur (L) comprise entre 100µm et 1000µm.

2. Dispositif selon la revendication 1, **caractérisé en ce que** les fibres comportent un matériau catalytique de traitement des gaz (G).

3. Dispositif (10) selon l'une quelconque des revendications précédentes, **caractérisé en ce que** les fibres (28) sont réalisées en un alliage à base de fer, de chrome, de terres rares et d'aluminium, la proportion en poids d'aluminium dans l'alliage étant supérieure ou égale à 5%.

4. Dispositif (10) selon l'une quelconque des revendications précédentes, **caractérisé en ce que** le moyen traitement des gaz comporte un bloc (22), notamment tubulaire, qui s'étend à l'intérieur de l'enceinte (12) de traitement des gaz, qui est constitué d'un réseau de fibres (28), et qui est traversé par les gaz (G) d'échappement cheminant du tube d'arrivée (14) vers le tube (16) d'évacuation des gaz.

5. Procédé pour la fabrication d'un bloc (22) tubulaire en fibres (28) métalliques pour un dispositif (10) de traitement des gaz (G) d'échappement d'un moteur de véhicule automobile selon l'une quelconque des revendications 1 à 4; **caractérisé en ce qu'**il comporte :
- un première étape de fabrication des fibres (28) du bloc (22) selon le procédé "melt overflow" dans lequel les fibres (28) sont obtenues par solidification sur un tambour rotatif (30), muni de dents (31) sur sa périphérie, d'un alliage (32) à base de fer, de chrome, de terres rares, ainsi que d'aluminium dont la proportion en poids dans l'alliage (32) est supérieure ou égale à 5%, ledit alliage étant fondu dans un creuset (34) et étalé par un bec (36) du creuset (34) qui lèche la surface cylindrique (38) du tambour rotatif (30), et
- une deuxième étape de mise en forme du bloc (22), lors de laquelle les fibres (28) sont amassées selon des orientations aléatoires dans un moule, notamment tubulaire, ouvert à ses deux extrémités.

6. Procédé selon la revendication précédente, **caractérisé en ce qu'**il comporte une troisième étape de soudage au cours de laquelle deux électrodes reliées à un générateur de courant sont introduites dans l'amas de fibres (28), et **en ce qu'**une décharge de courant est délivrée par le générateur de courant pour souder les fibres (28) entre elles.

7. Procédé selon la revendication précédente, **caractérisé en ce qu'**il comporte une quatrième étape au cours de laquelle le bloc (22) en fibres (28) est enduit d'un composé catalytique qui recouvre chaque fibre.

8. Procédé selon l'une quelconque des revendications 5 à 7, **caractérisé en ce que** le tambour rotatif (30) comporte des gorges circulaires (40), perpendiculaires à l'axe (A) de la surface cylindrique du tambour, qui sont dimensionnées pour débiter en continu des fibres (28) de section lenticulaire, notamment convexe, d'une hauteur (H) comprise entre 30µm et 350µm, d'une épaisseur (E) comprise entre 20µm et 200µm, et d'une largeur (L) comprise entre 100µm et 1000µm.

## Claims

1. Device (10) for treating the exhaust gases (G) of a motor vehicle engine, of the type that comprises an exhaust gas (G) intake tube (14) and an exhaust gas (G) discharge tube (16) between which is interposed a chamber (12) for treating gases comprising a gas treatment means (22) made of metallic fibres, **characterized in that** the fibres (28) of the gas treatment means are randomly directed and are fibres (28) which have a half-moon-shaped cross section, particularly like that of a convex lens, the cross-section of which has a height (H) between 30µm and 350µm, a thickness (E) between 20µm and 200µm, and a width (L) between 100µm and 1000µm.

2. Device according to claim 1, **characterized in that** the fibres are coated with a gas (G) treatment catalytic material.

3. Device (10) according to one of the preceding claims, **characterized in that** the fibres (28) are made of an alloy based on iron, chromium, rare earths and aluminium in a weight proportion of 5% or over.

4. Device (10) according to any of the preceding claims, **characterized in that** the gas treatment means comprises a principally tubular unit (22) that extends inside the gas treatment chamber (12), which consists of a network of fibres (28), and which is crossed by the exhaust gases (G) making their way from the gas intake tube (14) to the gas discharge tube (16).

5. Method for manufacturing a tubular unit (22) made of metal fibres (28) for a device (10) for treating the exhaust gases (G) of a motor vehicle engine, **characterized in that** it includes :
- a first stage of manufacturing the fibres (28) of the unit (22) according to the "melt overflow" MO process in which the fibres (28) are obtained by solidification on a rotating drum (30), equipped with teeth (31) on its periphery, of an alloy (32) based on iron, chromium, rare earths and aluminium in a weight proportion of 5% or more, which is melted in a crucible (34) and spread by a spout (36) of the crucible (34) that laps against the cylindrical surface (38) of the rotating drum (30), and
- a second stage of forming the unit (22), when the fibres (28) are piled together in random directions in a principally tubular mould, open at both its ends.

6. Method according to the preceding claim, **characterized in that** it includes a third stage of welding during which two electrodes connected to a current generator are inserted into the mass of fibres (28), and **in that** a current is discharged by the current generator to weld the fibres (28) together.

7. Method according to the preceding claim, **characterized in that** it includes a fourth stage during which the block (22) of fibres (28) is coated with a catalytic material covering each fibre.

8. Method according to anyone of claims 5 to 7, **characterized in that** the rotating drum (30) has circular grooves (40), perpendicular to the axis (A) of the cylindrical surface of the drum which are dimensioned for continuously pulling out the fibres (28) of a lenticular cross section, particularly convex cross section, with a height (H) between 30µm and 350µm, a thickness (E) between 20µm and 200µm, and a width (L) between 100µm and 1000µm.

## Patentansprüche

1. Vorrichtung (10) zur katalytischen Behandlung von Abgasen (G) eines Automotors, vom Typ welche ein Rohr (14) zum Zuleiten von Abgasen (G) und ein Rohr (16) zum Ableiten von Abgasen (G) umfasst, zwischen denen eine Einfassung (12) zur Behandlung der Gase eingefügt ist, die ein aus metallischen Fasern (28) hergestelltes Mittel zur Behandlung der Gase umfasst, **dadurch gekennzeichnet, dass** die Fasern (28) des Mittels zur Behandlung der Gase zufällig orientiert und längliche Fasern (28) sind, einen insbesondere linsenförmig konvexen Querschnitt in Form von Möndchen haben, deren Querschnitt eine Höhe (H), die zwischen 30 µm und 350 µm liegt, eine Stärke (E), die zwischen 20 µm und 200 µm liegt, und eine Breite (L), die zwischen 100 µm und 1000 µm liegt, aufweist.

2. Vorrichtung nach Anspruch 1, **dadurch gekennzeichnet, dass** die Fasern ein katalytisches Material zur Behandlung der Gase (G) aufweisen.

3. Vorrichtung (10) nach einem der vorhergehenden Ansprüche, **dadurch gekennzeichnet, dass** die Fasern (28) aus einer Legierung auf Basis von Eisen, Chrom, Seltenen Erden und Aluminium hergestellt sind, wobei der Gewichtsanteil von Aluminium in der Legierung größer oder gleich 5% ist.

4. Vorrichtung (10) nach einem der vorhergehenden Ansprüche, **dadurch gekennzeichnet, dass** das Mittel zur Behandlung der Gase einen, insbesondere rohrförmigen, Block (22) umfasst, der im Innern der Einfassung (12) zur Behandlung der Gase verläuft, der aus einem Netz von Fasern (28) gebildet ist, und welcher von den Abgasen (G) durchquert wird, die von dem Zuleitrohr (14) zu dem Ableitrohr (16) der Gase geleitet werden.

5. Verfahren zur Herstellung eines rohrförmigen Blocks (22) aus metallischen Fasern (28) für eine Vorrichtung (10) zur Behandlung von Abgasen (G) eines Automotors nach einem der Ansprüche 1 bis 4, **dadurch gekennzeichnet, dass** es umfasst:
- einen ersten Schritt zur Herstellung der Fasern (28) des Blocks (22) nach dem "melt overflow"-Verfahren, in welchem die Fasern (28) durch Verfestigung auf einer auf ihrem Umfang mit Zähnen (31) versehenen Rotationstrommel (30) aus einer Legierung (32) auf Basis von Eisen, Chrom, Seltenen Erden, sowie Aluminium, dessen Gewichtsanteil in der Legierung (32) größer oder gleich 5% ist, hergestellt werden, wobei die Legierung in einem Tiegel (34) geschmolzen und durch einen Schnabel (36) des Tiegels (34) abgegeben wird, welcher die zylindrische Oberfläche (38) der Rotationstrommel (30) überstreicht, und
- einen zweiten Schritt zur Formgebung des Blocks (22), bei welchem die Fasern (28) in zufälligen Orientierungen in einer, insbesondere rohrförmigen, Form, die an ihren beiden Enden offen ist, angehäuft werden.

6. Verfahren nach dem vorherigen Anspruch, **dadurch gekennzeichnet, dass** es einen dritten Schritt zum Verschweißen aufweist, bei welchem zwei mit einem Stromgenerator verbundene Elektroden in die Masse der Fasern (28) eingebracht werden, und dass eine Stromentladung durch den Stromgenerator gespeist wird, um die Fasern (28) untereinander zu verschweißen.

7. Verfahren nach dem vorherigen Anspruch, **dadurch gekennzeichnet, dass** es einen vierten Schritt aufweist, bei welchem der Block (22) aus Fasern (28) mit einer katalytischen Verbindung überzogen wird, welche jede Faser bedeckt.

8. Verfahren nach einem dem Ansprüche 5 bis 7, **dadurch gekennzeichnet, dass** die Rotationstrommel (30) kreisförmige Kehlen (40) umfasst, die senkrecht zur Achse (A) der zylindrischen Fläche der Trommel sind, welche so dimensioniert sind, dass sie Fasern (28) mit einem, insbesondere konvexen, linsenförmigen Querschnitt, mit einer Höhe (H), die zwischen 30 µm und 350 µm liegt, einer Stärke (E), die zwischen 20 µm und 200 µm liegt, und einer Breite (L), die zwischen 100 µm und 1000 µm liegt, kontinuierlich abgeben.
